# EUROPEAN PATENT APPLICATION

(11) **EP 3 702 591 A1**
(43) Date of publication of application: **02.09.2020**
(21) Application number: 19159466.2
(22) Date of filing: 26.02.2019
(51) Int. Cl.: F01M 11/12, F03D 80/70, F16N 19/00

(54) **VOLUME MONITORING ARRANGEMENT**

(71) Applicant: Siemens Gamesa Renewable Energy A/S, 7330 Brande (DK)
(72) Inventor: Petronic, Vujadin, 7330 Brande (DK); Rychahivskyy, Andriy, 7400 Herning (DK)
(74) Representative: Aspacher, Karl-Georg

(57) **Abstract**

The invention describes a volume monitoring arrangement (1) of a lubricant supply system (2) comprising a lubricant reservoir (21), a pump unit (22) for pumping lubricant (L) from the reservoir (21) during a lubrication cycle and a metering module (24) for passing volume units of lubricant to a consumer (31, 32, 33), which volume monitoring arrangement (1) comprises an event detector (11) realized to report a metering event (110) occurring in the metering module (24); a tracking module (12) configured to count the number of reported metering events (110); and a volume computation module (13) configured to determine the volume of lubricant (L) remaining in the reservoir (21) on the basis of the event count (120). The invention further describes a method of determining the volume of lubricant (L) remaining in the reservoir (21) of a lubricant supply system (2); and a wind turbine (3).

## Description

### Background

Large bearings such as wind turbine main bearings and rotor blade pitch bearings must be adequately lubricated in order to avoid bearing damage. The lubricant of a large bearing is usually a mixture of a base oil, a thickener and various additives such as corrosion protection. The lubricant is generally quite thick and is often simply referred to as grease. The lubrication grease in a bearing is consumed during operation of the machine owing to the effects of friction, heat, leakage through seals, etc. Grease also ages over time and its quality deteriorates as a result. Therefore, the grease in a bearing must be replenished as necessary to ensure that the bearing is always protected by a sufficient quantity of good-quality grease.

Since a bearing is generally designed as a closed system - for example, roller elements contained in a race formed by the stationary and rotary housing parts - it is possible to estimate the quantity of grease required for safe operation over a certain time period and to manually replenish the grease regularly. However, if the grease is consumed ahead of the scheduled refill procedure i.e. due to leakage through an inadequate seal, the bearing can be severely damaged. For this reason, it can be preferable to lubricate such large bearings using a continuous lubrication system that can be configured to deliver small quantities of grease at relatively frequent intervals.

A continuous lubrication system generally comprises a grease reservoir, a pump, and a metering unit. The reservoir can have a favourably large capacity, for example enough lubricant to last for at least several months. Lubricant is pumped through a hose from the reservoir to the metering unit. A hose leads from a metering unit outlet to machinery (e.g. a main bearing, a rotor blade pitch bearing, etc.). Depending on the system design, a metering unit can deliver grease to several "consumers" simultaneously. In a continuous lubrication system, lubricant consumed by a bearing will be replenished by feeding more lubricant through the hose into the bearing. The volume in the reservoir will therefore gradually diminish.

However, lubricant is rarely consumed in a well-defined manner. The rate at which the lubricant is consumed will depend on various factors such as the operating temperature of the machinery in which it is used. Also, it is common practice to halt a lubrication system in very cold conditions to avoid damage to parts of the system, owing to the increase in viscosity which adversely affects the flow of lubricant. For these reasons, it is not possible to exactly predict the amount of lubricant that will be consumed over time, and consequently there is no way of accurately determining the volume of lubricant remaining inside the reservoir. One way of estimating the level of lubricant remaining in the reservoir is to attach an ultrasonic level sensor to the outside of the reservoir and configure it to report a low level. Alternatively, an electromagnetic switch can be placed inside the grease reservoir and set up to be activated when the predefined low grease level is reached. The functionality of such sensor arrangements is limited to reporting a warning when the low grease level is reached, and possibly also to report a "no grease" alarm when the reservoir is empty. Service routines for wind turbines with such lubrication systems have relied on the "low grease level" warning signal, waiting for this signal to schedule a reservoir filling routine. However, service technicians arriving at the wind turbine have often found the reservoir to be nearly empty instead. This may be due to the inherent low level of accuracy of such sensor arrangements or to a malfunction. A more serious situation arises when a "no grease" alarm is issued without any preceding "low level" warning. Costly damage to bearings can easily occur if lubricant cannot be replenished in time. Such level sensor arrangements are therefore considered to be unreliable. For this reason, it is common practice to schedule annual service procedures and to top up the reservoir, even if the grease level is well above the low level. However, service routines that are carried out in the absence of any immediate need generally add to overall costs.

Therefore, it is an object of the invention to provide an accurate way of determining the lubricant level in the reservoir of a lubricant supply system.

This object is achieved by the volume monitoring arrangement of claim 1 and by the method of claim 6 of determining the volume of lubricant remaining in the reservoir of a lubricant supply system.

In the context of the invention, a continuous lubricant supply system may be assumed to comprise a lubricant reservoir, a pump unit for pumping lubricant from the reservoir during a lubrication cycle and a metering module for passing volume units of lubricant to a consumer such as a bearing that needs lubrication. As described above, such a lubricant generally comprises oil and a thickener, and may also include other components such as an anti-corrosion additive. Such a mixture is generally referred to as a "grease", and the terms "lubricant" and "grease" may be used interchangeably in the following.

According to the invention, the volume monitoring arrangement comprises an event detector realized to detect a metering event occurring in the metering module; a tracking module configured to count the number of detected metering events; and a volume computation module configured to determine the volume of lubricant remaining in the reservoir on the basis of the event count.

The invention is based on the insight that a metering module may be configured to always pass essentially the same volume of lubricant. The manufacturer of a continuous lubricant supply system may configure the metering module according to a customer specification to deliver a certain lubricant volume quantity, for example a certain number of cubic centimetres, or it may be possible for the customer to configure the metering module on site.

The inventors have recognised that the behaviour of the metering module may be used as a basis for determining the remaining lubricant volume in the reservoir. Instead of relying on a level sensor on the reservoir tank itself, the invention takes a different approach, namely to track the metering events and to keep a running count or tally of the metering event history. By tracking the number of times the metering module passes volume units of lubricant, it is possible to make an advantageously accurate and reliable estimate of the remaining quantity of lubricant in the reservoir. The operator of the lubricant supply system can then react in good time to replenish the lubricant supply as needed. The advantage of the inventive volume monitoring arrangement is that the risk of the reservoir running dry can essentially be eliminated. Particularly when the lubricant supply system is in use at a remote location such as a wind turbine, the inventive volume monitoring arrangement can save significant costs because it does away with the need for service personnel to travel to the site simply in order to check on the reservoir level.

According to the invention, the method of determining the remaining volume of lubricant in the reservoir comprises the steps of detecting a metering eventing occurring in the metering module; counting the number of detected metering events; and determining the volume of lubricant remaining in the reservoir on the basis of the event count.

The inventive method provides real-time accurate information on actual lubricant consumption and the level of grease left inside the grease reservoir. This continuous monitoring of the lubricant level makes it easier to schedule meaningful service procedures.

According to the invention, a wind turbine comprises such a continuous lubricant supply system for supplying lubricant to a number of consumers, for example to the main bearing of the generator and/or to the rotor blade pitch bearings. As described above, the lubricant supply system comprises a lubricant reservoir, a pump unit for pumping lubricant from the reservoir during a lubrication cycle and a metering module configured to pass volume units of lubricant to the consumer(s) to ensure that the desired quantity of lubricant is fed to the consumer in a lubrication cycle. The wind turbine also comprises an embodiment of the inventive volume monitoring arrangement to monitor the volume of lubricant remaining in the reservoir.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the lubricant supply system is installed in a wind turbine to provide grease to a main bearing and/or to the rotor blade pitch bearings. The grease can be delivered to the consumer(s) by hoses that lead from the metering module. A metering module can have several outlets, for example, and a hose can be connected between each outlet and a consumer. Generally, the purpose of a metering module is to dispense or pass a certain volume of lubricant in response to a trigger (which can be issued by a controller, for example). Each metering event may be referred to as a "pulse", since the action of the metering module is to repeatedly push the lubricant volume units into the hose(s) leading to the bearing(s). For example, a metering module may be constructed to pass x cm³ in response to a trigger. The owner of the lubricant supply system can set up the controller to apply the trigger signal according to manufacturer specifications. For example, the manufacturer of a certain type of main bearing may specify that it should receive 24 cm³ in each lubrication cycle, and that lubrication should be performed four times a day. If the metering module has a capacity of 1.2 cm³ per pulse, the owner of the lubricant supply system can set up the controller to generate 20 trigger signals in a suitably timed sequence, and to do this four times daily at six-hour intervals. In this way, the bearing receives 96 cm³ daily, in four "doses" of 24 cm³.

In a preferred embodiment of the invention, the metering module comprises an actuator for transporting a predetermined volume unit of lubricant through the metering module, and the event detector is realized to detect a movement of the actuator during a metering event.

In a preferred embodiment of the invention, the actuator comprises a number of pistons, and the event detector is realized to detect a displacement of a piston during a metering event. In a particularly preferred embodiment of the invention, the event detector comprises a proximity sensor and is mounted on the metering module. Such a proximity sensor may be used to monitor the functionality of the metering module. A signal from the proximity sensor may be expected whenever the piston moves during a metering event. The only reason for the metering module pistons not to move during a metering event would be a failure condition such as no grease being delivered from the reservoir, a feed line rupture, or a malfunction of the metering module, in which case the absence of the expected signal from metering module would be interpreted as a failure.

The proximity sensor is preferably arranged in line with a piston, and can include a magnet that is attracted to the metal (usually steel) of which the piston is made. In one possible embodiment, whenever the piston moves towards the proximity sensor during a metering event, the magnet is displaced to close an electric circuit. When the piston moves away from the proximity sensor again, the magnet returns to its original position and the electric circuit is opened again. Of course, the proximity sensor can be realised in any suitable way, for example using an inductor circuit, a piezoelectric circuit, etc.

To determine the consumed volume of lubricant, the predetermined metering volume unit can be multiplied by the event count. In this way, the inventive method makes it possible to maintain a running total of the consumed lubricant volume.

The remaining lubricant volume is preferably determined by subtracting the consumed lubricant volume from an initial lubricant volume or fill level. The fill level can be determined by adding the replenish volume to the initial volume. For example, a service procedure can be scheduled when the remaining volume in the reservoir has been determined to be 15 litres. The service personnel add 65 litres to the reservoir. The new initial volume is now 80 litres. The subsequent lubricant level monitoring will subtract the consumed volume from this initial volume.

To avoid the danger of running too low, the inventive method preferably also comprises a step of issuing a warning when the remaining lubricant volume approaches a threshold level. For example, a low reservoir volume for the lubricant supply system of an offshore wind turbine may be deemed to be 20% of the total reservoir capacity, and a reporting module can be configured to report a "low level" to the wind turbine operator so that there is sufficient time to schedule a service procedure. A low reservoir volume for the lubricant supply system of an onshore wind turbine can be less, for example only 10% - 15% of the total reservoir capacity, since it is generally not as difficult to schedule a service procedure for an onshore wind turbine. In this way, different "low levels" can be determined for lubricant supply system depending on where they are installed.

In a preferred embodiment of the invention, the event detector is realised to transmit a wireless signal in response to a metering event occurring in the metering module, and the tracking module is realised to detect the wireless signal.

In a preferred embodiment of the invention, the tracking module and the volume computation module are realized as modules of a wind turbine controller. For example, the tracking module can be realized to receive an input signal whenever the event detector detects a metering event, and can apply a suitable algorithm to maintain a running total of the count. Alternatively, the tracking module can be realized as a counter and can be supplied as an off-the-shelf electronic component that can be mounted on a printed circuit board. An input to the counter can be a signal from the event detector, and the counter output is a digital signal that is passed to the volume computation module. Similarly, the volume computation module can apply suitable algorithms to compute the consumed lubricant volume using the running total and the known metering volume, and to subtract this consumed volume from an initial reservoir volume. Alternatively, the volume computation module can be realised to carry out these steps using hardware components, as will be known to the skilled person. The tasks of tracking the metering module events and computing the remaining volume of grease in the reservoir may therefore be performed in software, in hardware, or in a combination of software and hardware.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig 1 shows an embodiment of the inventive volume monitoring arrangement;
Fig 2 shows the metering module used in the volume monitoring arrangement of Fig 1;
Fig 3 shows a wind turbine;
Fig 4 shows a prior art lubricant supply system.

In the diagrams, like numbers refer to like objects throughout. Objects in the diagrams are not necessarily drawn to scale.

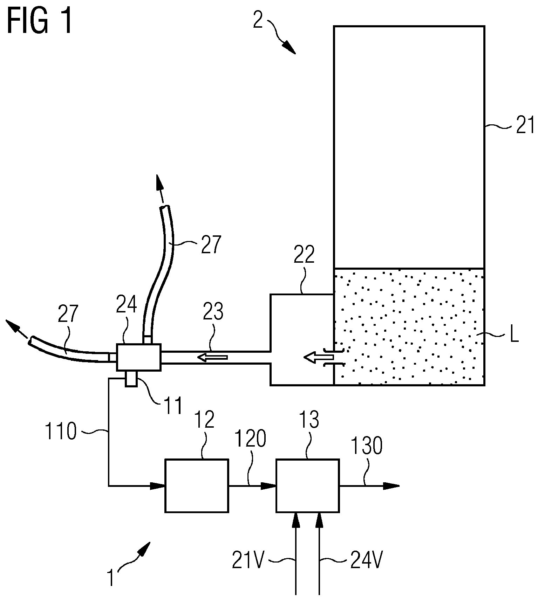

Fig 1 shows an embodiment of the inventive volume monitoring arrangement 1 for a continuous lubricant supply system 2. The lubricant supply system 2 comprises a lubricant reservoir 21 and a pump unit 22 for pumping lubricant L from the reservoir 21 during a lubrication cycle. The lubricant L is pumped through a feed line 23 to a metering module 24. One or more consumers (e.g. bearings or other machinery) are connected by hoses 27 to the metering module 24. The metering module 24 is configured to pass defined volume units of lubricant to a consumer. For example, a hose 27 can be connected to the lubricant inlet of a bearing by means of one or more conduits, and the pressurized lubricant is fed into the bearing where it can be distributed by the motion of the bearing. To determine the remaining volume of lubricant L in the reservoir 21, the volume monitoring arrangement 1 comprises an event detector 11 realized to detect and report a metering event 110 occurring in the metering module 24, and a tracking module 12 configured to count the number of detected metering events 110.

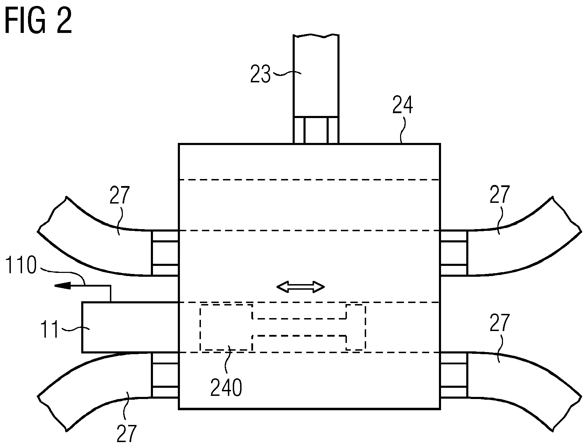

Fig 2 shows a more detailed view of the metering module 24 of Fig 1. This can be an off-the-shelf unit as will be known to the skilled person. In this embodiment, the metering module 24 has four outlets to which hoses 27 can be attached. An arrangement of bores, pistons 240 (one is indicated here) and channels inside the metering module causes specific quantities of lubricant to be fed into the outlets in each metering event. Again, the skilled person will be familiar with the operating principle of such a metering module 24. The diagram indicates the possible location of a proximity sensor 11 in line with one of the pistons 240. The primary purpose of the proximity sensor is to provide confirmation that the metering module is operational, by reporting a metering event 110. The signal 110 can be generated, for example, whenever an electric circuit is opened/closed according to the distance between a magnet and one end of a piston 240 as indicated here.

Returning to Fig 1, a volume computation module 13 is configured to determine the volume of lubricant remaining in the reservoir 21 on the basis of the event count 120. For example, every time the actuator in the metering module 24 is caused to move, the event detector 11 reports a metering event 110. In each metering event, a predetermined volume of lubricant is passed to a consumer. The predetermined metering volume 24V is made known to the volume computation module 13, which can then keep a running total of the consumed lubricant by multiplying this known metering volume by the event count 120. The volume computation module 13 is also given a fill value 21V specifying the volume of lubricant put into the reservoir 21. For example, after filling a certain quantity of lubricant into the reservoir 21 during a service routine, this information 21V can be entered by a user interface. The volume computation module 13 will adjust this by any initial volume already in the reservoir 21 and uses the total as a starting value from which it deducts the metered quantities to track the reservoir contents in real time. As the level in the reservoir decreases, the volume computation module 13 is estimating the remaining volume, and issues a signal 130 in good time to schedule a re-fill service procedure. A "threshold" remaining volume may be specified depending on how long it takes to schedule a service routine, for example to ensure sufficient remaining lubricant if scheduling a service routine requires a run-up time of several weeks.

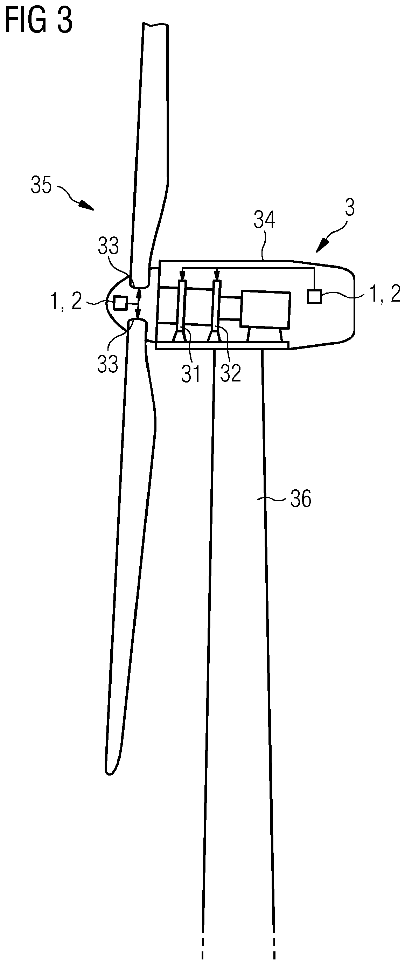

Fig 3 shows a wind turbine 3 with a nacelle 34 mounted on top of a tower 36, and an aerodynamic rotor 35 (three rotor blades mounted to a hub) that turns a low-speed rotor shaft. The rotor blades are rotatably mounted to the hub by means of pitch bearings 33. The low-speed rotor shaft is supported by two bearings 31, 32. These bearings 31, 32, 33 are exemplary, and it shall be understood that a wind turbine can be constructed in other ways. The bearings 31, 32, 33 are given as examples of lubricant consumers, and must be reliably supplied with lubricant in order to avoid serious damage. To this end, these bearings 31, 32, 33 can be supplied with lubricant by one or more continuous lubricant supply systems, which can be installed in the nacelle or in the hub of the wind turbine.

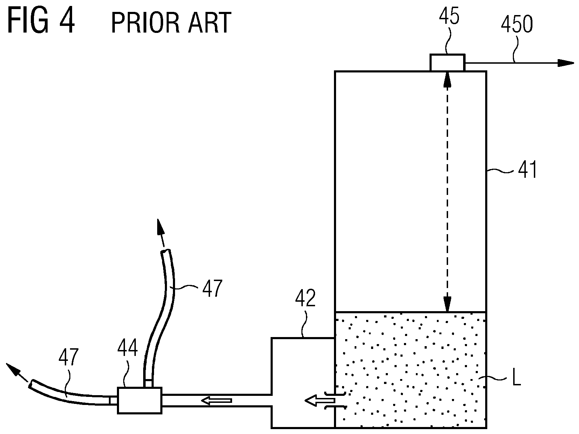

Fig 4 shows a prior art continuous lubricant supply system 4. The lubricant supply system 4 comprises a lubricant reservoir 41 and a pump unit 42 for pumping lubricant L from the reservoir 41 to a metering module 44 during a lubrication cycle. The metering module 44 is configured to pass defined volume units of lubricant to a consumer such as a bearing. To determine the remaining volume of lubricant L in the reservoir 41, a level sensor 45, for example an acoustic sensor, is mounted on the reservoir 41. The purpose of the level sensor 45 is to issue a "low level" warning signal when the grease level has dropped to a predetermined lower threshold level. However, as explained in the introduction, such sensors may be inaccurate, and relying on such a sensor may result in damage to a lubricant consumer if the reservoir runs empty.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A volume monitoring arrangement (1) of a lubricant supply system (2) comprising a lubricant reservoir (21), a pump unit (22) for pumping lubricant (L) from the reservoir (21) during a lubrication cycle and a metering module (24) for passing volume units of lubricant to a consumer (31, 32, 33), which volume monitoring arrangement (1) comprises
- an event detector (11) realized to report a metering event (110) occurring in the metering module (24);
- a tracking module (12) configured to count the number of reported metering events (110); and
- a volume computation module (13) configured to determine the volume of lubricant (L) remaining in the reservoir (21) on the basis of the event count (120).

2. A volume monitoring arrangement according to claim 1, wherein the metering module (24) comprises an actuator (240) for transporting a volume unit (24V) of lubricant through the metering module (24), and wherein the event detector (11) is realized to detect a movement of the actuator (240).

3. A volume monitoring arrangement according to claim 1 or claim 2, wherein the actuator (240) is realised as a piston (240), and wherein the event detector (11) is realized to detect a displacement of the piston (240).

4. A volume monitoring arrangement according to any of the preceding claims, wherein the event detector (11) is mounted on the metering module (24).

5. A volume monitoring arrangement according to any of the preceding claims, wherein the event detector (11) comprises a proximity sensor.

6. A method of determining the volume of lubricant (L) remaining in the reservoir (21) of a lubricant supply system (2), which method comprises the steps of
- providing a pump unit (22) for pumping lubricant (L) from the reservoir (21) during a lubrication cycle;
- providing a metering module (24) configured to pass volume units of lubricant (L) to a consumer (31, 32, 33);
- detecting and reporting a metering event (11) occurring in the metering module (24);
- counting the number of reported metering events (11); and
- determining the volume of lubricant (L) remaining in the reservoir (21) on the basis of the event count (120).

7. A method according to claim 6, comprising a step of multiplying the event count (120) by a predetermined volume unit (24V) to determine a consumed lubricant volume.

8. A method according to claim 7, wherein the remaining lubricant volume is determined by subtracting the consumed lubricant volume from an initial lubricant volume (21V).

9. A method according to any of claims 6 to 8, comprising a step of issuing a warning (130) when the remaining lubricant volume approaches a predefined minimum level.

10. A wind turbine (3) comprising
- a lubricant supply system (2) for supplying lubricant to a number of consumers (31, 32, 33), which lubricant supply system (2) comprises a lubricant reservoir (21), a pump unit (22) for pumping lubricant (L) from the reservoir (21) during a lubrication cycle and a metering module (24) configured to pass volume units of lubricant to a consumer (31, 32, 33); and
- a volume monitoring arrangement (1) according to any of claims 1 to 6 to monitor the volume of lubricant (L) remaining in the reservoir (21).

11. A wind turbine according to claim 10, wherein the event detector (11) is realised to report a metering event (11) to the tracking module (12) over a wireless interface.

12. A wind turbine according to claim 10 or claim 11, wherein the tracking module (12) and the volume computation module (12) are realized as modules of a wind turbine controller.
